# EUROPÄISCHE PATENTSCHRIFT

(11) **EP 2 208 060 B1**
(45) Veröffentlichungstag und Bekanntmachung des Hinweises auf die Patenterteilung: **25.09.2013**
(21) Anmeldenummer: 08850125.9
(22) Anmeldetag: 07.11.2008
(51) Int. Cl.: G01N 27/417

(54) **EINRICHTUNG ZUR ÜBERPRÜFUNG DER FUNKTIONSFÄHIGKEIT EINES SENSORELEMENTS**
DEVICE FOR CHECKING THE OPERABILITY OF A SENSOR ELEMENT
DISPOSITIF POUR VÉRIFIER LE BON FONCTIONNEMENT D'UN ÉLÉMENT DÉTECTEUR

(30) Priorität: 14.11.2007 DE 102007054398; 26.02.2008 DE 102008011231
(43) Veröffentlichungstag der Anmeldung: 21.07.2010
(73) Patentinhaber: Robert Bosch GmbH, 70442 Stuttgart (DE)
(72) Erfinder: BEVOT, Claudius, 70197 Stuttgart (DE); LUEDERS, Uwe, 72127 Kusterdingen-Jettenburg (DE)
(86) Internationale Anmeldenummer: PCT/EP2008/065166
(87) Internationale Veröffentlichungsnummer: WO 2009/062896

(56) Entgegenhaltungen:
- DE-A1- 10 147 390
- DE-A1-102004 042 027
- DE-A1-102006 012 461
- DE-U1- 20 106 750

## Beschreibung

Die Erfindung betrifft ein Verfahren zur Überprüfung der Funktionsfähigkeit eines Sensorelements zur Bestimmung der Konzentration von Gaskomponenten in einem Gasgemisch, insbesondere zur Bestimmung der Konzentration von Gaskomponenten im Abgas von Brennkraftmaschinen nach der Gattung des unabhängigen Anspruchs 1.

### Stand der Technik

Im Stand der Technik sind unterschiedliche Konzentrationssonden bekannt Neben sogenannten Sprungsonden, bei denen die Kennlinie bei Lambda = 1 einen signifikanten Sprung aufweist, der zur Bestimmung des Wertes Lambda = 1 verwendet wird, existieren sogenannte Breitband-Lambdasonden. Eine Breitband-Lambdasonde und eine Schaltungsanordnung zum Betreiben einer solchen Breitband-Lambdasonde gehen beispielsweise aus der Buchveröffentlichung "Bosch Kraftfahrtechnisches Taschenbuch", 25. Auflage, Oktober 2003, Seite 134 hervor. Eine solche Sonde in Mehrschichtkeramik besteht im Wesentlichen aus einer Kombination aus einer herkömmlichen, als galvanische Zelle wirkenden Konzentrationssonde (Nernst-Sonde) sowie einer Grenzstrom- oder "Pump"-Zelle. An die Pumpzelle wird von außen eine Spannung angelegt. Wenn die Spannung groß genug ist, stellt sich ein sogenannter Grenzstrom ein, der proportional dem Unterschied der Sauerstoffkonzentration auf beiden Seiten der Sonde ist. Mit dem Strom werden - polaritätsabhängig - Sauerstoffionen transportiert. Durch die Schaltungsanordnung, die eine elektronische Regelschaltung darstellt, wird sichergestellt, dass der Konzentrationssonde von der Pumpzelle über einen sehr engen Diffusionsspalt immer genau so viel Sauerstoff aus dem Abgas zugeführt wird, dass an ihr der Zustand Lambda = 1 herrscht. Bei Luftüberschuss im Abgas, im sogenannten Magerbereich, wird Sauerstoff abgepumpt, bei geringem Restsauerstoffgehalt des Abgases, im fetten Bereich, wird durch Umkehrung der Pumpspannung Sauerstoff zugeführt. Der Pumpstrom bildet dabei das Ausgangssignal der Sonde.

Der Abgleich einer solchen planaren Breitband-Lambdasonde erfolgt über einen Stromteiler. Hierzu wird in einem Stecker der Sonde, wie er beispielsweise aus der DE 201 06 750 U1 hervorgeht, ein abgleichbarer Widerstand angeordnet, der parallel zu einem Messwiderstand, der vorzugsweise Teil eines Steuergeräts ist, geschaltet ist. Bei Diffusionsbarrieren mit hohem Grenzstrom wird der Abgleichwiderstand niederohmig belassen. Bei niedrigem Grenzstrom wird der Widerstand dadurch erhöht, dass mittels eines Lasers ein Einschnitt in ihm vorgenommen wird. Durch diesen Widerstand wird die Pumpstrom-Konzentrations-Kennlinie gedreht, sodass neben dem Abgleichpunkt auch alle anderen Punkte auf der Sollkennlinie liegen.

Die Sonde ist über entsprechende Leitungen mit einer Auswerteschaltungseinrichtung, die beispielsweise Teil eines Steuergeräts ist, verbunden.

Ein Leitungsbruch der Sondenzuleitung kann bei den aus dem Stand der Technik bekannten Sensorelementen und Schaltungseinrichtungen nicht ohne Weiteres erkannt werden. Nach den Vorschriften der On-Board-Diagnose II (OBD II) ist nun eine fortgesetzte Überwachung aller abgasrelevanten Bauelemente erforderlich. Insbesondere müssen auch Lambdasonden und die Sondenleitungen derartiger Lambdasonden kontinuierlich, beispielsweise getaktet alle 500 ms, überwacht werden. Dabei muss auch überwacht werden, ob ein Kabelbruch vorliegt, der während des Betriebs des Fahrzeuges rein prinzipiell eintreten kann.

Der Erfindung liegt daher die Aufgabe zugrunde, eine Einrichtung zur Überprüfung der Funktionsfähigkeit eines Sensorelements, insbesondere einer Breitband-Lambdasonde zu vermitteln, durch welche ein derartiger Kabelbruch erkannt werden kann.

### Offenbarung der Erfindung

### Vorteile der Erfindung

Diese Aufgabe wird durch eine Einrichtung zur Überprüfung der Funktionsfähigkeit eines Sensorelementes der gattungsgemäßen Art gelöst durch die Merkmale des Anspruchs 1. Die Grundidee der Erfindung ist es, einen Lastabfall an einem Anschlusssensorelement zu erfassen, ohne dass eine Plausibilisierung von Sondensignalen vorgenommen werden muss, die auch bei einer plötzlichen Zustandsänderung nicht eindeutig sein können.

Hierzu sieht die Erfindung vor, in Reihe zu dem Messwiderstand ein ansteuerbares Schaltermittel anzuordnen, das für eine vorgebbare Zeit hochohmig schaltbar ist, und während dieser Zeit die Spannung über dem Messwiderstand in der Mess- und Auswerteeinrichtung zu erfassen und auszuwerten und bei Überschreiten eines vorgebbaren Schwellenwertes eine Fehlerausgabe vorzunehmen. Durch dieses Schaltermittel wird der Messwiderstand gewissermaßen abgeschaltet und hierdurch verhindert, dass auch bei einem Kabelbruch weiterhin ein Strom in die Sonde fließen kann, denn der Messwiderstand weist im Wesentlichen den gleichen Wert auf wie der Abgleichwiderstand.

Durch die in den abhängigen Ansprüchen aufgeführten Maßnahmen sind vorteilhafte Weiterbildungen und Verbesserungen der in dem unabhängigen Anspruch angegebenen Schaltungsanordnung möglich.

So sieht eine vorteilhafte Ausführungsform vor, dass das Schaltermittel ein Halbleiterschalter, insbesondere ein Transistor ist, der auf einfache Weise ansteuerbar ist. Weiterhin kann vorteilhafter Weise vorgesehen sein, diesen Halbleiterschalter als Teil einer integrierten Schaltung auszuführen, die beispielsweise ein Teil des Steuergerätes sein kann.

### Kurze Beschreibung der Zeichnungen

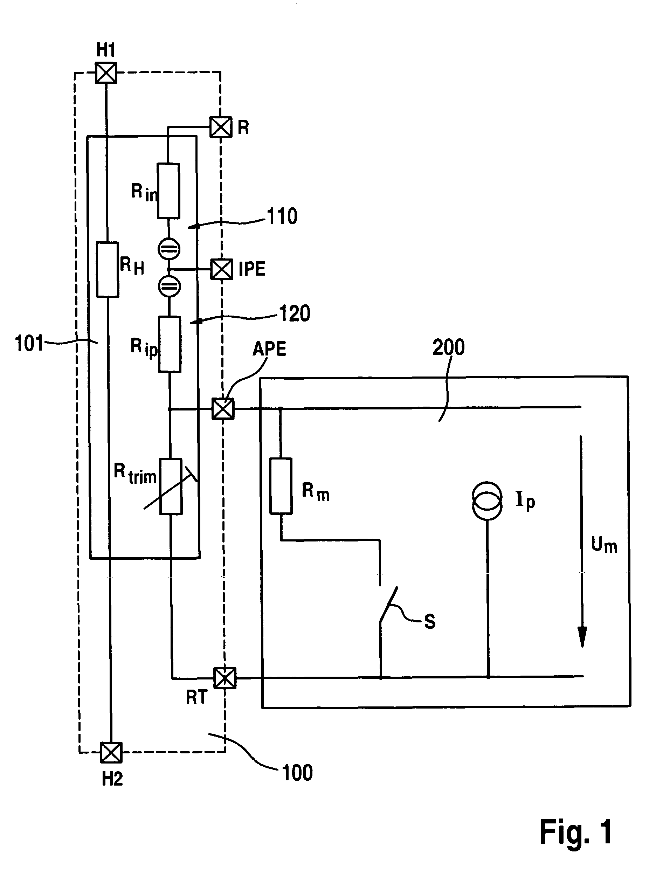

Ein Ausführungsbeispiel der Erfindung ist in Figur 1 der Zeichnung dargestellt und in der nachfolgenden Beschreibung näher erläutert.

### Ausführungsformen der Erfindung

In der Figur ist schematisch eine Einrichtung zur Überprüfung der Funktionsfähigkeit eines Sensorelements zur Bestimmung der Konzentration von Gaskomponenten in einem Gasgemisch, insbesondere der Konzentration von Gaskomponenten im Abgasgemisch von Brennkraftmaschinen dargestellt. Das Sensorelement 100 weist eine Nernstzelle 110 und eine Pumpzelle 120 auf. In Fig. 1 sind die Nernstzelle und die Pumpzelle jeweils durch ihr Ersatzschaltbild dargestellt, die Nernstzelle durch eine Spannungsquelle und den Innenwiderstand R_{iN}, die Pumpzelle durch eine Spannungsquelle und den Innenwiderstand R_{iP}. Die Breitbandlambdasonde weist ferner eine Heizung auf, schematisch dargestellt durch den Widerstand R_{H}. Durch diese Heizung wird die Sonde erwärmt, bis eine Temperatur erreicht ist, die einen ordnungsgemäßen Betrieb der Sonde ermöglicht. Die eigentliche Sonde 101 ist in einem Gehäuse angeordnet, welches Anschlusspins H1, H2 für die Heizung und Anschlusspins R sowie IPE für die Nernstzelle sowie Anschlusspins APE, IPE für die Pumpzelle. Die Nernstelektrode und die Elektrode der inneren Pumpelektrode sind identisch. Das Sensorelement weist ferner einen Trimmwiderstand Rₜᵣᵢₘ auf, der zwischen dem Anschluss der äußeren Pumpelektrode APE und einem Sondenpin RT angeordnet ist.

Der Abgleichwiderstand Rₜᵣᵢₘ bildet mit einem Messwiderstand Rₘ einen Stromteiler, durch den der Abgleich der Kennlinie der Breitband-Lambdasonde erfolgt. Der abgleichbare Widerstand Rₜᵣᵢₘ ist bevorzugt in einem Stecker der Sonde angeordnet. Bei beispielsweise Diffusionsbarrieren mit hohem Grenzstrom wird der Abgleichwiderstand Rₜᵣᵢₘ niederohmig belassen. Bei niedrigem Grenzstrom dagegen wird ein Laserschnitt in den Abgleichwiderstand Rₜᵣᵢₘ auf an sich bekannte Weise eingebracht, der den Widerstandswert erhöht. Auf diese Weise kann die Kennlinie auf an sich bekannte Weise gedreht werden, so dass neben dem Abgleichpunkt auch alle anderen Punkte auf der Soll-Kennlinie liegen. Bei einer derartigen Sonde wird ein Strom (Pumpstrom Iₚ, in der Figur 1 als Pumpstromquelle dargestellt) in die Pumpzelle über den Sondenpin RT eingeprägt, bis sich die Nernstspannung in der Nernstzelle einstellt. Der Sondenpin RT ist an eine Lambda-Sonden-Auswerteschaltung 200 angeschlossen. Der ausgeregelte Strom Iₚ ist ein Maß für die Zusammensetzung des Abgas-Luftgemisches. Der Strom fließt dabei sowohl über den Abgleichwiderstand Rₜᵣᵢₘ in die Sonde 100 als auch über den dazu parallel geschalteten Messwiderstand Rₘ der Auswerteschaltung 200. Der Spannungsabfall Um über dem Messwiderstand Rₘ wird ausgewertet zur Messung der Luftzahl, also des Lambdawertes.

Kommt es nun zu einem Kabelbruch, beispielsweise einem Abriss der Sondenleitung am Sondenpin RT, so bleibt der Messwiderstand Rₘ in der Auswerteschaltung 200, die beispielsweise Teil eines Steuergeräts ist, weiter erhalten und der Strom kann weiterhin fließen. Da nun der Wert des Abgleichwiderstands Rₜᵣᵢₘ im gleichen Bereich wie der Wert des Messwiderstands Rₘ liegt, kann in diesem Fall nicht eindeutig auf das Fehlen des Abgleichwiderstandes Rₜᵣᵢₘ geschlossen werden und damit auf einen Kabelbruch. Um einen Kabelbruch eindeutig erkennen zu können, sieht die Erfindung daher vor, den Messwiderstand Rₘ über einen niederohmigen Schalter S auszuschalten. Hierzu wird der Schalter S, der in Reihe zu dem Messwiderstand Rₘ liegt, hochohmig geschaltet. Wenn nun in diesem Fall bei aufgrund eines Leitungsbruchs fehlendem Abgleichwiderstand Rₜᵣᵢₘ versucht wird, weiter einen Strom einzuprägen, wird sich die Spannung an dem Sondenpin RT weiter erhöhen, bis eine Schwelle überschritten wird, die ohne Lastabfall nicht erreicht werden würde. Durch eine Spannungsmessung kann demnach eindeutig auf einen Lastabfall geschlossen werden.

Um auf einen Lastabfall an dem Sondenpin RT zu schließen, wird zusammengefasst daher der Schalter S über eine vorgebbare Zeit hochohmig geschaltet und in dieser Zeit die Messspannung Um erfasst. Nähert sich diese einem Begrenzungswert und überschreitet sie einen vorgebbaren Schwellenwert, wird auf einen Lastabfall geschlossen.

Es ist zu bemerken, dass der Schalter S ein Halbleiterschalter sein kann, der beispielsweise durch einen Transistor realisierbar ist, wobei der Transistor auch ein Transistor einer integrierten Schaltung sein kann, die ihrerseits Teil der Schaltungsanordnung 200 und insbesondere Teil eines Motorsteuergerätes sein kann.

## Patentansprüche

1. Einrichtung zur Überprüfung der Funktionsfähigkeit eines Sensorelements (100) zur Bestimmung der Konzentration von Gaskomponenten in einem Gasgemisch, insbesondere der Konzentration von Gaskomponenten im Abgas von Brennkraftmaschinen, mit einer äußeren Pumpelektrode (APE) und einer inneren Pump- und Nernst-Elektrode (IPE), wobei zwischen der äußeren Elektrode (APE) und einem Sondenpin (RT) ein Messwiderstand (Rₘ) und ein dazu parallel geschalteter Abgleichwiderstand (Rₜᵣᵢₘ) vorgesehen sind und wobei durch eine Pumpstromquelle ein Pumpstrom (Iₚ) in die äußere Pumpelektrode (APE) einprägbar ist und eine sich dabei zwischen der äußeren Elektrode (APE) und dem Sondenpin (RT) einstellende Messspannung (Uₘ) durch eine Mess- und Auswerteeinrichtung (200) erfassbar ist, **dadurch gekennzeichnet, dass** in Reihe zu dem Messwiderstand (Rₘ) ein ansteuerbares Schaltermittel (S) angeordnet ist, wobei die Mess- und Auswerteschaltung (200) so eingerichtet ist, dass das Schaltermittel (S) für eine vorgegebene Zeit hochohmig geschaltet wird, während der die Spannung über dem Messwiderstand erfasst und ausgewertet wird, und dass bei Überschreiten eines vorgebbaren Spannungsschwellenwerts eine Fehlerausgabe erfolgt.

2. Einrichtung nach Anspruch 1, **dadurch gekennzeichnet, dass** das Schaltermittel (S) ein Halbleiterschalter, insbesondere ein Transistor ist.

3. Einrichtung nach Anspruch 2, **dadurch gekennzeichnet, dass** der Halbleiterschalter Teil einer integrierten Schaltung ist.

## Claims

1. Device for checking the operational capability of a sensor element (100) for determining the concentration of gas components in a gas mixture, in particular the concentration of gas components in the exhaust gas of the internal combustion engine, having an outer pump electrode (APE) and an inner pump and Nernst electrode (IPE), wherein a measuring resistor (Rₘ) and a trimming resistor (Rₜᵣᵢₘ) connected parallel thereto are provided between the outer electrode (APE) and a probe pin (RT) and wherein a pump current (Iₚ) can be compressed into the outer pump electrode (APE) by a pump current source, and a measuring voltage (Uₘ) which occurs in this context between the outer electrode (APE) and the probe pin (RT) can be detected by means of a measuring and evaluation device (200), **characterized in that** an actuable switch means (S) is arranged in series with the measuring resistor (Rₘ), wherein the measuring and evaluation circuit (200) is configured in such a way that the switch means (S) is switched to high impedance for a predefined time during which the voltage is detected and evaluated across the measuring resistor, and **in that** when a predefinable voltage threshold value is exceeded a fault output occurs.

2. Device according to Claim 1, **characterized in that** the switch means (S) is a semiconductor switch, in particular a transistor.

3. Device according to Claim 2, **characterized in that** the semiconductor switch is part of an integrated circuit.

## Revendications

1. Dispositif pour contrôler l'aptitude au fonctionnement d'un élément de détection (100) destiné à déterminer la concentration de composantes gazeuses dans un mélange gazeux, notamment la concentration de composantes gazeuses dans les gaz d'échappement de moteurs à combustion interne, comprenant une électrode de pompe externe (APE) et une électrode de pompe et Nernst interne (IPE), une résistance de mesure (Rₘ) et une résistance de compensation (Rₜᵣᵢₘ) branchée en parallèle avec celle-ci étant prévues entre l'électrode externe (APE) et une broche de sonde (RT) et un courant de pompe (Iₚ) pouvant être appliqué à l'électrode de pompe externe (APE) par une source de courant de pompe et une tension de mesure (Uₘ) qui s'établit ainsi entre l'électrode externe (APE) et la broche de sonde (RT) pouvant être captée par un dispositif de mesure et d'interprétation (200), **caractérisé en ce qu'**un moyen de commutation (S) commandable est disposé en série avec la résistance de mesure (Rₘ), le circuit de mesure et d'interprétation (200) étant configuré de telle sorte que le moyen de commutation (S) est commuté en une haute résistance pendant une durée prédéfinie pendant laquelle la tension aux bornes de la résistance de mesure est captée et interprétée, et **en ce qu'**un défaut est signalé en cas de dépassement d'une valeur de seuil de tension pouvant être prédéfinie.

2. Dispositif selon la revendication 1, **caractérisé en ce que** le moyen de commutation (S) est un commutateur à semiconducteur, notamment un transistor.

3. Dispositif selon la revendication 2, **caractérisé en ce que** le commutateur à semiconducteur est une partie d'un circuit intégré.
